# EUROPÄISCHE PATENTSCHRIFT

(11) **EP 3 995 434 B1**
(45) Veröffentlichungstag und Bekanntmachung des Hinweises auf die Patenterteilung: **26.02.2025**
(21) Anmeldenummer: 21204565.2
(22) Anmeldetag: 25.10.2021
(51) Int. Cl.: B66C 23/62, B66C 23/74, B66C 13/52

(54) **MOBILKRAN MIT KLAPPBARER BEGEHUNG**
MOBILE CRANE WITH FOLDABLE WALKWAY
GRUE MOBILE COMPRENANT UN ACC?S PLIABLE

(30) Priorität: 06.11.2020 DE 202020106371 U
(43) Veröffentlichungstag der Anmeldung: 11.05.2022
(73) Patentinhaber: Liebherr-Werk Nenzing GmbH, 6710 Nenzing (AT)
(72) Erfinder: Neßler, Wolfgang, 6751 Außerbraz (AT)
(74) Vertreter: Laufhütte, Dieter

(56) Entgegenhaltungen:
- EP-A1- 2 712 966
- CN-U- 203 925 307
- DD-A1- 130 365
- JP-A- 2016 069 946

## Beschreibung

Die vorliegende Erfindung betrifft einen Mobilkran, insbesondere einen Raupenkran, nach dem Oberbegriff des Anspruchs 1.

Fahrbare Krane bzw. Mobilkrane kommen typischerweise immer dann zum Einsatz, wenn keine stationären Krane am Einsatzort verfügbar sind oder aus anderen Gründen nicht oder nur mit erhöhtem Aufwand verwendet werden können. Mobilkrane können einen Unterwagen mit Rad- oder Raupenfahrwerk aufweisen und besitzen regelmäßig einen drehbar auf dem Unterwagen gelagerten Oberwagen, an den ein wippbarer Hauptausleger angelenkt ist. Typischerweise befinden sich am Oberwagen ferner im Frontbereich eine Fahrerkabine zur Bedienung des Krans und im Heckbereich ein Oberwagenballast.

Größere Mobilkrane müssen für den Transport zum Einsatzort in kleinere Transporteinheiten zerlegt werden. Um einen derartigen Mobilkran, insbesondere einen Raupenkran, sicher aufbauen zu können, ist ein normgerechter Zugang zur Fahrerkabine und zu den einzurichtenden technischen Systemen notwendig. Dies stellt das Bedienpersonal bzw. Aufbauteam oft vor aufwändige Herausforderungen bezüglich des An- und Abbaus von Zugangssystemen. Diese Zugangssysteme, bei denen es sich beispielsweise um Zugangstreppen, Laufstege oder Plattformen bzw. Podeste für seitliche Begehungen handeln kann, müssen häufig mit Hilfskranen und/oder mehreren Personen aufwändig an den Mobilkran angebaut werden. Ein seitliches Unterschieben von Podesten ist auf Grund der stabilen Bauart moderner Oberwagen nicht möglich. Ein Abnehmen von Geländern und Podesten ist dagegen aufwändig und erfordert typischerweise mehrere Personen und/oder Hilfsmittel.

Ein Mobilkran mit den Merkmalen des Oberbegriffs des Anspruchs 1 ergibt sich bereits aus der CN 203 925 307 U. Auch die DD 130 365 A1 zeigt bereits eine ähnliche Anordnung.

Aufgabe der vorliegenden Erfindung ist es daher, ein einfach zu Installierendes Zugangssystem für einen Mobilkran bereitzustellen. Der An- und Abbau der Komponenten des Zugangssystems soll dabei schnell und ohne externe Hilfsmittel durchführbar sein.

Erfindungsgemäß wird diese Aufgabe durch einen Mobilkran mit den Merkmalen des Anspruchs 1 gelöst. Demnach wird ein Mobilkran, insbesondere Raupenkran, vorgeschlagen, welcher einen Unterwagen mit einem Fahrwerk und einen drehbar auf dem Unterwagen gelagerten Oberwagen mit einem schwenkbaren Ausleger umfasst. Seitlich am Oberwagen sind mindestens zwei Podeste vorgesehen, über die der Oberwagen durch Bedienpersonal begehbar ist. Die Podeste sind dabei permanent am Oberwagen angeordnet, d.h. sie verbleiben stets am Oberwagen und werden nicht für den Transport abgebaut.

Erfindungsgemäß umfassen die mindestens zwei Podeste jeweils einen Boden und ein Geländer, welche von einer Transportstellung in eine Arbeitsstellung bewegbar sind und umgekehrt. In der Transportstellung liegen die Podeste bzw. Boden und Geländer der Podeste am Oberwagen an und nehmen daher eine platzsparende und für den Transport geeignete Position ein. In der Arbeitsstellung sind die Podeste durch Bedienpersonal begehbar und durch die Geländer gesichert. Dies bedeutet, dass in der Arbeitsstellung die Böden so ausgerichtet sind, dass sie begehbar sind, und zudem die Podeste begehende Personen durch die Geländer gegen ein Abstützen gesichert sind.

Dadurch, dass die Podeste samt Geländer am Oberwagen verbleiben und von einer für den Transport eingeklappten bzw. "angelegten" Stellung in eine einen Zugang zum Oberwagen ermöglichende Arbeitsstellung bewegt werden können, unterbleibt ein aufwändiger und zeitraubender Auf- und Abbau. Die Podeste sind dabei insbesondere derart ausgebildet und angeordnet, dass sie von einer einzigen Person ohne Hilfskran oder dergleichen bequem vom Boden aus installiert bzw. in die Arbeitsstellung gebracht werden können. Die Geländer müssen nicht eigens an die Podeste angebaut werden. Vorzugsweise ist die Installation bzw. der Abbau ohne zusätzliche Handwerkszeuge möglich. Insgesamt ergibt sich so ein bequemerer, schnellerer und einfacherer Aufbau- bzw. Abbauprozess des Mobilkrans.

Erfindungsgemäß ist vorgesehen, dass die Podeste um mindestens zwei Schwenkachsen in die Arbeitsstellung verschwenkbar sind, wobei vorzugsweise zwei der mindestens zwei Schwenkachsen nicht parallel zueinander stehen. Die Podeste werden also nicht durch einfaches Ausklappen um eine einzige, beispielsweise horizontale, Achse in die Arbeitsstellung verbracht, sondern es erfolgt ein aus mehreren Einzelbewegungen zusammengesetzter Installationsvorgang. Diese Einzelbewegungen können gleichzeitig oder nacheinander ausführbar sein.

Erfindungsgemäß ist vorgesehen, dass die Böden um zwei nicht-parallele, insbesondere um zwei senkrecht zueinander stehende, Schwenkachsen in die Arbeitsstellung verschwenkbar und die Geländer in die Arbeitsstellung schwenkbar, klappbar, verschiebbar und/oder teleskopierbar sind. Der Bewegungsablauf für den Boden unterscheidet sich also vom Bewegungsablauf für das Geländer beim Verbringen des Podests von der Transport- in die Arbeitsstellung und umgekehrt.

Vorteilhafte Ausführungsformen der Erfindung ergeben sich aus den Unteransprüchen und der nachfolgenden Beschreibung.

In einer weiteren möglichen Ausführungsform ist vorgesehen, dass die Böden und die Geländer der Podeste unabhängig voneinander bewegbar sind. Vorzugsweise sind die Böden bzw. Geländer ferner unabhängig voneinander mit den Böden bzw. Geländern benachbarter Podeste verbindbar.

In einer weiteren möglichen Ausführungsform ist vorgesehen, dass die Podeste in ihren Arbeitsstellungen miteinander lösbar verbindbar sind. Dadurch ergibt sich als Oberwagenbegehung ein stabiler und durchgängiger Laufsteg, welcher im Vergleich zu bekannten Begehungen, die z.B. mehrere beabstandete, d.h. durch Lücken voneinander getrennte Podeste umfassen, eine höhere Trittsicherheit für das Bedienpersonal gewährleistet.

Vorzugsweise sind die Podeste bzw. Teile der Podeste in ihren Arbeitsstellungen ineinander einhängbar und/oder miteinander verbolzbar und/oder miteinander verschraubbar. Einhängeverbindungen ergeben dabei eine besonders bequeme und ohne zusätzliche Werkzeuge herstellbare Verbindung der Podeste.

Es kann vorgesehen sein, dass die Verbindungen der Podeste reversibel verriegelbar sind, beispielsweise mittels einer Bolzen- oder Einrastverbindung. Dadurch wird ein ungewolltes Lösen der Verbindungen der Podeste verhindert.

In einer weiteren möglichen Ausführungsform ist vorgesehen, dass die Böden Hakenelemente aufweisen, über die sie in der Arbeitsstellung an Bodenbefestigungselementen benachbarter Podeste einhängbar sind. Die Böden sind insbesondere um eine horizontale Achse schwenkbar, wobei die Hakenelemente zur Herstellung der Einhängeverbindung an der der Schwenkachse gegenüberliegenden Seite angeordnet sind. Eine besonders einfache Konstruktion ergibt sich dadurch, dass die Hakenelemente eines Podests auf der Schwenkachse des benachbarten Podests abgelegt bzw. eingehängt werden, wobei die Öffnungen der Hakenelemente in der Arbeitsstellung nach unten weisen und auf der Schwenkachse aufliegen.

Die horizontalen Schwenkachsen der Podeste stellen also die vorgenannten Bodenbefestigungselemente dar. Sie werden vorzugsweise bei der Bewegung der Podeste von der Transport- in die Arbeitsstellung selbst um eine insbesondere vertikale Schwenkachse verschwenkt.

Alternativ oder zusätzlich kann vorgesehen sein, dass ein oder mehrere Podeste an am Oberwagen angeordneten Bodenbefestigungselementen einhängbar sind. Dabei kann es sich beispielsweise um Podeste handeln, die an den Enden oder in Knick- oder Kurvenbereichen der Begehung angeordnet sind. Diese Podeste werden direkt am Oberwagen eingehängt.

Die Einhängeverbindungen können über Verriegelungselemente reversibel verriegelbar sein, um ein ungewolltes Lösen der Einhängeverbindungen zu verhindern.

In einer weiteren möglichen Ausführungsform ist vorgesehen, dass die Geländer schwenkbar, klappbar, verschiebbar und/oder teleskopierbar und über Geländerbefestigungselemente mit benachbarten Geländern und/oder direkt mit dem Oberwagen verbindbar sind. Hierbei kann es sich um eine Einhängeverbindung handeln, welche vorzugsweise reversibel verriegelbar ist.

Das Geländer jedes Podests kann mehrere gelenkig miteinander verbundene Streben umfassen. Durch Verschieben, Verschwenken bzw. Ausklappen und/oder Teleskopieren eines oder mehrerer Teile können die Geländer in die Arbeitsstellung gebracht und untereinander verbunden werden. Das Geländer von einem oder von mehreren Podesten kann/können alternativ oder zusätzlich direkt mit dem Oberwagen bzw. mit daran angebrachten Geländerbefestigungselementen verbindbar sein. Dabei kann es sich beispielsweise um Podeste handeln, die an den Enden oder in Knick- oder Kurvenbereichen der Begehung angeordnet sind.

Die Geländer können klappbare Teile umfassen, die beispielsweise als einzelne schwenkbare Streben oder als Parallelogrammführungen ausgebildet sein können. In einer weiteren möglichen Ausführungsform ist vorgesehen, dass der Oberwagen eine Fahrerkabine umfasst, in deren Bereich mindestens ein weiteres Podest angeordnet ist, wobei vorzugsweise die mindestens drei Podeste in der Arbeitsstellung eine durchgängige Oberwagenbegehung entlang einer Seite des Oberwagens bilden. Dadurch kann die Fahrerkabine bequem über die durch die erfindungsgemäßen Podeste gebildete Laufstegverbindung bzw. Begehung erreicht werden. Die Oberwagenbegehung kann sich vom Heckbereich des Oberwagens bis zur Fahrerkabine erstrecken.

In einer weiteren möglichen Ausführungsform ist vorgesehen, dass der Zugang bzw. Zustieg der Oberwagenbegehung im Bereich des der Fahrerkabine gegenüberliegenden Hecks des Oberwagens erfolgt. Der Zugang erfolgt also nicht wie bei vielen üblichen Zugangssystemen vorne im Bereich der Fahrerkabine.

In einer weiteren möglichen Ausführungsform ist vorgesehen, dass ein Zugangselement mit einem Boden und mindestens einem Geländer am Oberwagen derart anbringbar ist, dass eine durch die in der Arbeitsstellung befindlichen Podeste gebildete Oberwagenbegehung über das Zugangselement zugänglich bzw. betretbar ist. Das Zugangselement kann an einem der klappbaren Podeste, direkt am Oberwagen oder an beidem befestigbar sein. Dabei kann das Geländer des Zugangselements mit einem Geländer eines der Podeste und/oder direkt mit dem Oberwagen verbindbar sein. Dies gilt vorzugsweise ebenfalls für den Boden des Zugangselements.

In einer weiteren möglichen Ausführungsform ist vorgesehen, dass das Zugangselement eine insbesondere schwenkbare Zugangstreppe oder Befestigungselemente zur Befestigung einer Zugangstreppe umfasst. Dadurch kann die in einer gewissen Höhe am Oberwagen durch die Podeste gebildete Begehung erreicht bzw. betreten werden. Bei der Zugangstreppe kann es sich auch um eine Leiter handeln.

In einer weiteren möglichen Ausführungsform ist vorgesehen, dass der Oberwagen einen Oberwagenballast aufweist, welcher über einen Hebemechanismus des Mobilkrans vom Boden anhebbar und auf dem Boden abstellbar ist. Bei dem Hebemechanismus kann es sich um ein Selbstverladesystem des Mobilkrans handeln. Das Zugangselement ist am Oberwagenballast, insbesondere an einer Ballastaufnahmeplatte des Oberwagenballasts, befestigt oder befestigbar.

Durch Anheben des Oberwagenballasts mittels des Hebemechanismus kann das Zugangselement auf die Höhe der Oberwagenbegehung gebracht werden. Somit kann das Zugangselement beispielsweise bequem vom Boden aus am Oberwagenballast befestigt, insbesondere eingehängt, und anschließend auf die entsprechende Höhe gehoben werden, sodass es mit der Oberwagenbegehung verbunden werden kann. Auf die Verwendung eines externen Hebezeugs kann dadurch verzichtet werden. Das Selbstverladesystem des Oberwagenballasts positioniert das Zugangselement insbesondere automatisch auf der richtigen Begehungsebene.

Es kann vorgesehen sein, dass das Zugangselement in / an entsprechende Befestigungselementen, die beispielsweise an der Ballastaufnahmeplatte oder einem Ballastelement des Oberwagenballasts angeordnet sind, eingehängt werden kann.

In einer weiteren möglichen Ausführungsform ist vorgesehen, dass das Zugangselement schwenkbar am Oberwagenballast gelagert oder lagerbar ist, wobei das Zugangselement, nachdem es über den Oberwagenballast bzw. mittels des Hebemechanismus angehoben wurde, durch Verschwenken mit der Oberwagenbegehung, insbesondere mit einem Podest der Oberwagenbegehung, verbindbar ist. Alternativ oder zusätzlich kann das Zugangselement durch Verschwenken direkt mit einem am Oberwagen angeordneten Befestigungselement verbindbar sein. Das Rotieren des Zugangselements kann in einfacher Weise von einem Bediener vom Boden aus durchgeführt werden. Auch hier kann eine reversible Verriegelung des Zugangselements an der Begehung bzw. am Oberwagen vorgesehen sein.

In einer weiteren möglichen Ausführungsform ist vorgesehen, dass die Oberseite des Oberwagens zugänglich bzw. begehbar und an der Oberseite des Oberwagens, insbesondere am Rand, ein Oberwagengeländer vorgesehen ist. Der Zugang der Oberseite des Oberwagens erfolgt vorzugsweise ausgehend von der durch die erfindungsgemäßen Podeste gebildeten Oberwagenbegehung, beispielsweise über eine Zugangsleiter oder -treppe. Dadurch kann das Bedienpersonal auf die Oberseite des Oberwagens steigen und die technischen Systeme oder andere Krankomponenten erreichen.

In einer weiteren möglichen Ausführungsform ist vorgesehen, dass an der Oberseite des Oberwagens mindestens ein Bodenelement verschiebbar und/oder klappbar bzw. schwenkbar gelagert ist, wobei vorzugsweise ein begehbarer Bereich an der Oberseite des Oberwagens durch eine Mehrzahl von derartigen Bodenelementen gebildet ist. Durch die Verschiebbarkeit bzw. Verschwenkbarkeit der Bodenelemente kann der begehbare Bereich flexibel angepasst werden.

Die Bodenelemente sind insbesondere selbsttragend und in Leichtbauweise gefertigt, beispielsweise als Gitter. Sie sind vorzugsweise auf einem Grundrahmen des Oberwagens und/oder auf daran angeordneten Befestigungselementen angebracht oder anbringbar. Es können Bodenelemente mit unterschiedlichen Formen, beispielsweise mit unterschiedlichen Breiten und/oder Längen, vorgesehen sein. Die Bodenelemente können ferner ebenso wie die Böden der Podeste Hakenelemente aufweisen, über die sie an entsprechenden Befestigungselementen des Oberwagens einhängbar bzw. ablegbar sind.

Es ist ferner vorstellbar, dass der Oberwagen auf jeder Seite mindestens zwei erfindungsgemäße Podeste umfasst, also auf jeder Seite eine Oberwagenbegehung aufweist. Eine der beiden Oberwagenbegehungen bzw. Laufstegverbindungen kann länger sein und bis zur Fahrerkabine reichen.

Die Böden der Podeste und/oder der Boden des Zugangsmoduls sind insbesondere in Leichtbauweise gefertigt. Dadurch ergibt sich eine einfachere Handhabung bzw. Installation der Podeste durch den Bediener. Die Böden können als Gitter ausgebildet sein.

Des Weiteren ist es möglich, dass die Podeste modular ausgestaltet sind bzw. Teil eines modularen Zugangssystems sind. Dadurch kann die Geometrie der Oberwagenbegehung an das jeweilige Gerät angepasst und z.B. beliebig erweitert werden.

Weitere Merkmale, Einzelheiten und Vorteile der Erfindung ergeben sich aus den nachfolgend anhand der Figuren erläuterten Ausführungsbeispielen. Es zeigen:
- Figur 1:: den erfindungsgemäßen Mobilkran gemäß einem Ausführungsbeispiel in einer perspektivischen Gesamtansicht;
- Figur 2:: eine perspektivische Darstellung dreier erfindungsgemäßer Podeste gemäß einem Ausführungsbeispiel in der Transportstellung;
- Figur 3:: die Podeste gemäß Figur 2, wobei ein Podest um eine erste Achse verschwenkt ist;
- Figur 4:: die Podeste gemäß Figur 3, wobei das verschwenkte Podest um eine weitere Achse verschwenkt ist;
- Figur 5:: die Podeste gemäß Figur 4, wobei das Geländer des verschwenkten Podests ausgeklappt ist;
- Figur 6:: die Podeste gemäß Figur 2, wobei sich alle Podeste in der Arbeitsstellung befinden;
- Figur 7:: eine vergrößerte Darstellung des Oberwagens des Mobilkrans gemäß Figur 1 mit abgesenktem Oberwagenballast;
- Figur 8:: den Mobilkran gemäß Figur 7 mit angehobenem Oberwagenballast und angeschlossenem Zugangsmodul; und
- Figur 9:: eine perspektivische Ansicht mehrerer Bodenplatten an der Oberseite des Oberwagens gemäß einem Ausführungsbeispiel.

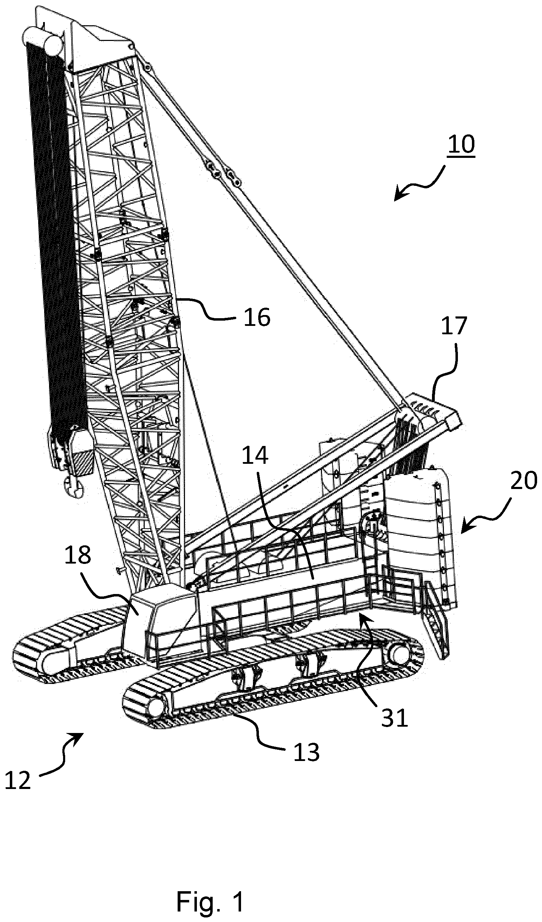

Die Figur 1 zeigt in einer perspektivischen Gesamtansicht ein Ausführungsbeispiel des erfindungsgemäßen Mobilkrans 10, bei dem es sich hier um einen Raupenkran handelt. Der Raupenkran 10 umfasst einen Unterwagen 12 mit zwei Raupenfahrwerken 13 und einen um eine vertikale Achse drehbar auf dem Unterwagen 12 gelagerten Oberwagen 14.

An den Oberwagen 14 ist in einem Frontbereich (links im Bild) ein um eine horizontale Achse schwenkbarer Hauptausleger 16 angelenkt. Der Hauptausleger 16 ist über einen schwenkbar am Oberwagen 14 gelagerten A-Bock 17 abgespannt. Ebenfalls im Frontbereich des Oberwagens 14 befindet sich eine Fahrerkabine 18 zur Steuerung des Mobilkrans 10. Im Heckbereich (rechts im Bild) befindet sich ein Oberwagenballast 20, welcher eine Ballastaufnahmeplatte 22 und eine Vielzahl darauf gestapelter Ballastelemente 24 bzw. Ballastplatten umfasst.

An derjenigen Seite des Oberwagens 14, auf der sich die Fahrerkabine 18 befindet, ist eine Oberwagenbegehung 31 in Form eines durchgängigen Laufstegs angeordnet, welcher über eine Zugangstreppe im Bereich des Oberwagenballasts 20 betreten bzw. bestiegen werden kann. Über die Oberwagenbegehung 31 wird für das Bedienpersonal ein sicherer Zugang zur erhöht gelagerten Fahrerkabine 18 und, über eine seitlich am Oberwagen 14 angebrachte Leiter, ein Zugang zur Oberseite des Oberwagens 14 hergestellt.

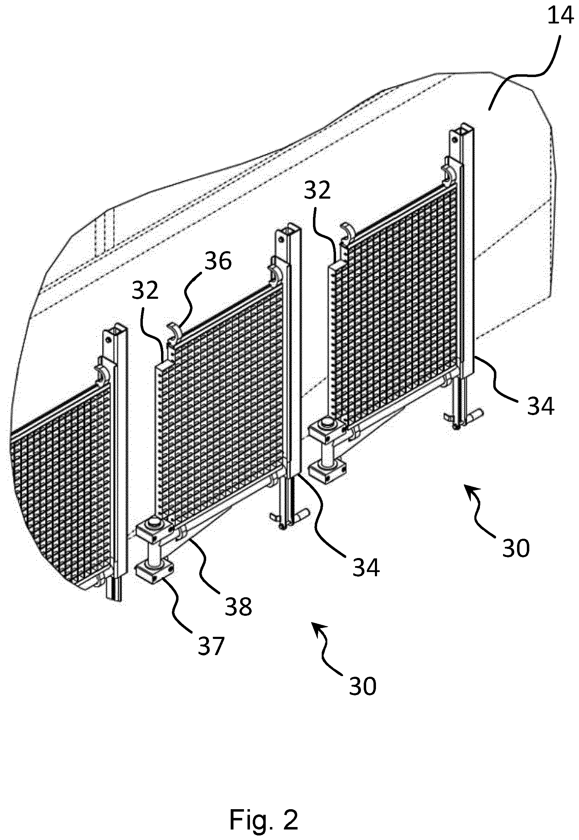

Die Oberwagenbegehung 31 wird durch eine Vielzahl von modular aufgebauten und in Leichtbauweise gefertigten Podesten 30 gebildet, welche gemäß einem Ausführungsbeispiel in den Figuren 2-6 in verschiedenen Stellungen perspektivisch dargestellt sind. Die erfindungsgemäßen Podestmodule bzw. Podeste 30 sind fest, d.h. permanent am Oberwagen 14 angebaut und werden für den Transport nicht abmontiert oder zerlegt. Stattdessen können die Podeste 30 für den Transport in eine platzsparende Transportstellung bewegt werden, in der sie flach seitlich am Oberwagen 14 anliegen. Diese Transportstellung ist in der Figur 2 gezeigt.

Die erfindungsgemäßen Podeste 30 umfassen jeweils einen verschwenkbaren Boden 32, welcher in diesem Ausführungsbeispiel als im Wesentlichen quadratisches Gitter ausgestaltet ist, und ein ausklappbares Geländer 34. Die Podeste 30 sind über Halterungen 37 fest mit dem Oberwagen 14 bzw. mit einem Grundrahmen des Oberwagens 14 verbunden. Es kann für jedes Podest 30 ein Arretierungsmittel vorgesehen sein (nicht gezeigt), welches die Podeste 30 bzw. Böden 32 in der Transportstellung fixiert, sodass diese nicht selbstständig ungewollt ausklappen.

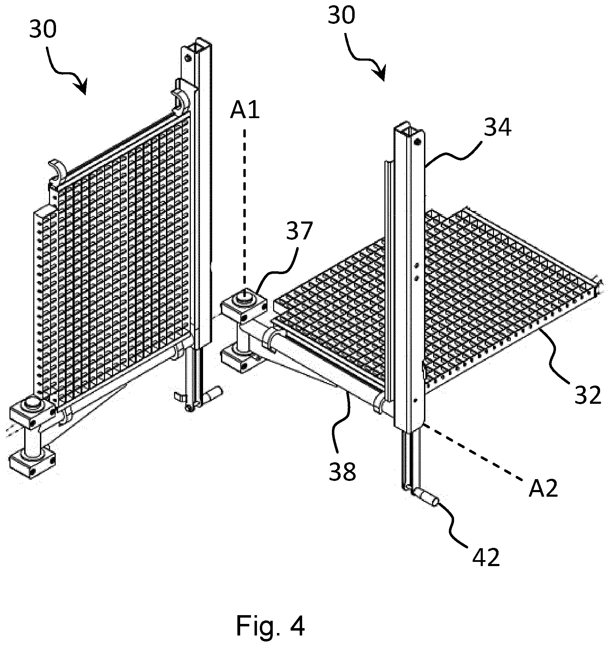

In jeder Halterung 37 ist ein als Schwenkkonsole ausgebildetes Bodenbefestigungselement 38 um eine vertikale Achse schwenkbar gelagert. Diese vertikale Achse bildet eine erste Schwenkachse A1, wie in der Figur 4 angedeutet ist. An der Schwenckonsole 38 sind wiederum der Boden 32 und das Geländer 34 des Podests 30 befestigt bzw. gelagert.

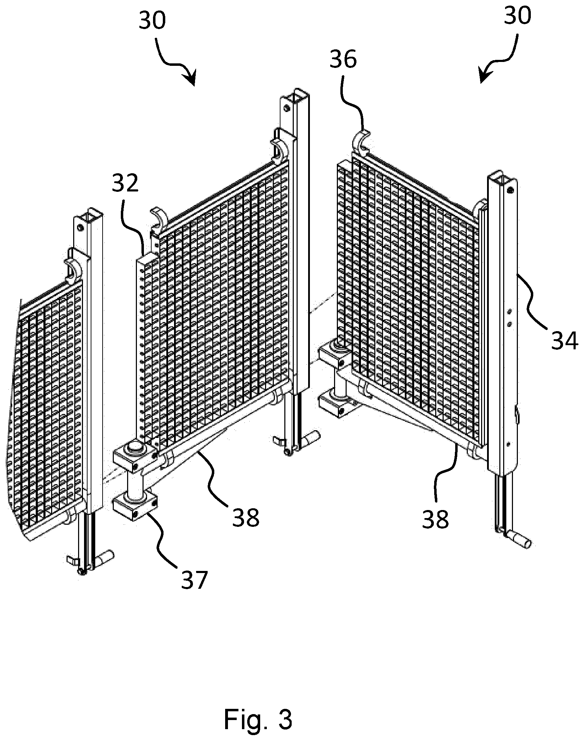

Wie in der Figur 3 zu sehen ist, lassen sich die Podeste 30 aus ihrer Transportstellung heraus um die erste. Schwenkachse A1 um (mindestens) 90° drehen. Hier kann optional ein Anschlag vorgesehen sein, der eine Drehung über 90° hinaus blockiert. Die einzelnen Podeste 30 lassen sich unabhängig voneinander bewegen bzw. verschwenken. Der Boden 32 und das Geländer 34 werden gemeinsam um die erste Schwenkachse A1 verschwenkt.

Die Schwenkkonsole 38 umfasst einen länglichen Arm, der senkrecht zur Schwenkachse A1 angeordnet ist und eine zweite Schwenkachse A2 bildet, da der Boden 32 schwenkbar am länglichen Arm der Schwenkkonsole 38 gelagert ist. Wie in der Figur 4 zu sehen ist, lässt sich der Boden 32 um den länglichen Arm der Schwenkkonsole 38 bzw. um die zweite Schwenkachse A2 verschwenken (nicht jedoch das Geländer 34) und umklappen, sodass er horizontal ausgerichtet ist. Der Boden 32 lässt sich also insbesondere ebenfalls um (mindestens) 90° um die zweite Schwenkachse A2 verschwenken. Die Schwenkachse A1 und A2 stehen senkrecht zueinander. Die zweite Schwenkachse A2 liegt in einer horizontalen Ebene.

Der die erste Schwenkachse A1 bildende kurze Arm der Schwenkkonsole 38 und deren langer Arm sind durch ein versteifend wirkendes Winkelelement bzw. Winkelblech miteinander verbunden. Die Schwenkkonsole 38 ist über den kurzen Arm in der Halterung 37 über zwei Lagerstellen drehbar gelagert. Hier sind selbstverständlich auch andere Anordnungen oder Formen der Lagerungen bzw. Halterungen 37 vorstellbar.

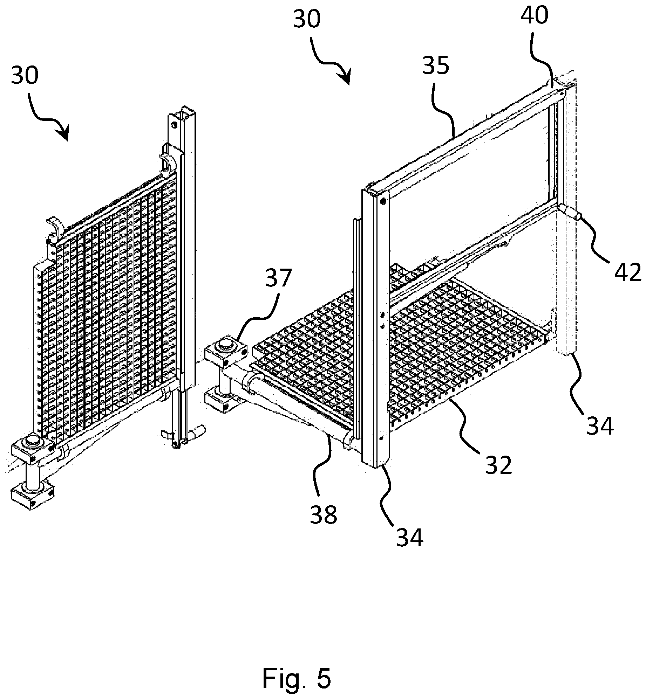

Wie in der Figur 5 gezeigt, lässt sich das Geländer 34 des Podests 30 ausklappen. Hierzu weist das Geländer 34 ein vertikales und fest mit der Schwenkkonsole 38 verbundenes Teil auf, an dem ein Klappteil 35 schwenkbar gelagert ist. Das Klappteil 35 umfasst zwei schwenkbar am vertikalen Geländerteil gelagerte Querstreben, die an deren dem vertikalen Geländerteil beabstandeten Ende mit einer Längsstrebe gelenkig verbunden sind. Dadurch bildet das Klappteil 35 eine Parallelogrammführung, welche im vollständig ausgeklappten Zustand ein Rechteck bildet (d.h. die Querstreben stehen senkrecht zum vertikalen Geländerteil).

Das rechte in der Figur 5 gezeigte Podest 30 ist vollständig ausgeklappt und befindet sich in der Arbeitsstellung, in der es durch einen Bediener begehbar ist und der Bediener durch das ausgeklappte Geländer 34 gegen ein Abstürzen gesichert ist. Zum leichteren Ausklappen des Klappteils 35 ist ein Hebel 42 vorgesehen, der in diesem Ausführungsbeispiel im Bereich der gelenkigen Verbindung der unteren Querstrebe und der Längsstrebe des Klappteils 35 angeordnet ist. Hier sind selbstverständlich auch andere Positionen und/oder Formen eines solchen Betätigungselements zur Erleichterung des Ausklappens des Klappteils 35 vorstellbar.

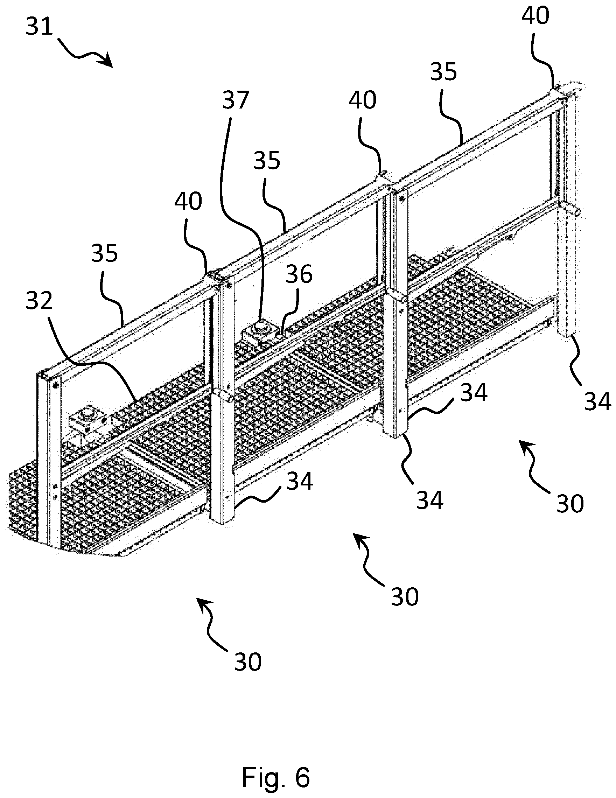

Die Figur 6 zeigt drei Podeste 30 in der Arbeitsstellung, welche einen durchgängigen Laufsteg bilden. Die Oberwagenbegehung 31 ist durch eine Vielzahl derartiger Podeste 30 aufgebaut, die sich in ihren Abmessungen unterscheiden können. So können manche Podeste 30 längere und/oder abgewinkelte Böden 32 aufweisen. Dadurch lässt sich die durch die Podeste 30 gebildete Oberwagenbegehung 31 an die Geometrie des Oberwagens 14 anpassen und beispielsweise um eine oder mehrere Ecken führen, sodass eine durchgängige Verbindung bzw. ein durchgängiger Laufsteg vom Heck bis zur Fahrerkabine 18 besteht (vgl. Figur 1).

Im Vergleich zu vielen bekannten Oberwagenbegehungen, schließen die erfindungsgemäßen Podeste 30 in der Arbeitsstellung unmittelbar aneinander an, sodass eine lückenlose, durchgängige Oberwagenbegehung 31 entsteht. Dadurch wird das Sturz- bzw. Verletzungsrisiko minimiert. Die Oberwagenbegehung 31 kann neben den erfindungsgemäßen klappbaren Podesten 30 auch fest installierte, d.h. unbewegliche Teile umfassen, so z.B. starr am Oberwagen 14 angebrachte Platten / Böden, Geländerteile oder dergleichen. Alternativ oder zusätzlich ist es denkbar, dass die Oberwagenbegehung 31 ein oder mehrere klappbare, teleskopierbare bzw. verschiebbare oder anderweitig bewegbare Teile umfasst. Derartige Teile können insbesondere in Eck- bzw. Kurvenbereichen oder den Endabschnitten der Oberwagenbegehung 31 vorgesehen sein.

Die Podeste 30 sind also in der Arbeitsstellung mit benachbarten Podesten 30 verbunden (vgl. Figur 6). Hierzu weisen die Böden 32 an den den Schwenkkonsolen 38 gegenüberliegenden Seiten zwei Hakenelemente 36 auf, die beim Umklappen der Böden um die zweiten Schwenkachsen A2 auf den langen Armen der Schwenkkonsolen 38 der benachbarten Podeste 30 ablegbar bzw. einhängbar sind. Die Böden 32 der benachbarten Podeste 30 sind also durch Einhängeverbindungen miteinander lösbar verbunden. Hier kann optional ein Verriegelungsmechanismus vorgesehen sein, der die Böden 32 mit den benachbarten Podesten 30 verriegelt. Denkbar wäre hier beispielsweise eine Rast- oder Bolzenverbindung.

Auch die Geländer 34 der benachbarten Podeste 30 sind in den Arbeitsstellungen miteinander verbindbar. Hierzu weisen die oberen Querstreben der Klappteile 35 jeweils an dem dem vertikalen Geländerteil gegenüberliegenden Ende ein Geländerbefestigungselement 40 auf, welches mit einem entsprechenden Befestigungselement oben am vertikalen Teil des Geländers 34 des benachbarten Podests 30 reversibel verbindbar, insbesondere über eine Einhängeverbindung einhängbar, ist. Auch hier kann eine reversible Verriegelung, beispielsweise mittels Rast- oder Bolzenverbindung, vorgesehen sein.

Da die Podestmodule 30 in Leichtbauweise ausgeführt sind und ohne den Anbau weiterer Teile wie z.B. Geländer direkt zwischen ihren Transport- und Arbeitsstellungen hin- und herbewegt werden können, kann die Installation der Oberwagenbegehung 31 schnell und bequem durch einen einzigen Bediener vom Boden aus erfolgen. Die Oberwagenbegehung 31 ist aufgrund der modularen Bauweise beliebig anpassbar bzw. erweiterbar. Dadurch können die erfindungsgemäßen Podeste 30 an beliebigen Oberwagengeometrien zum Einsatz kommen.

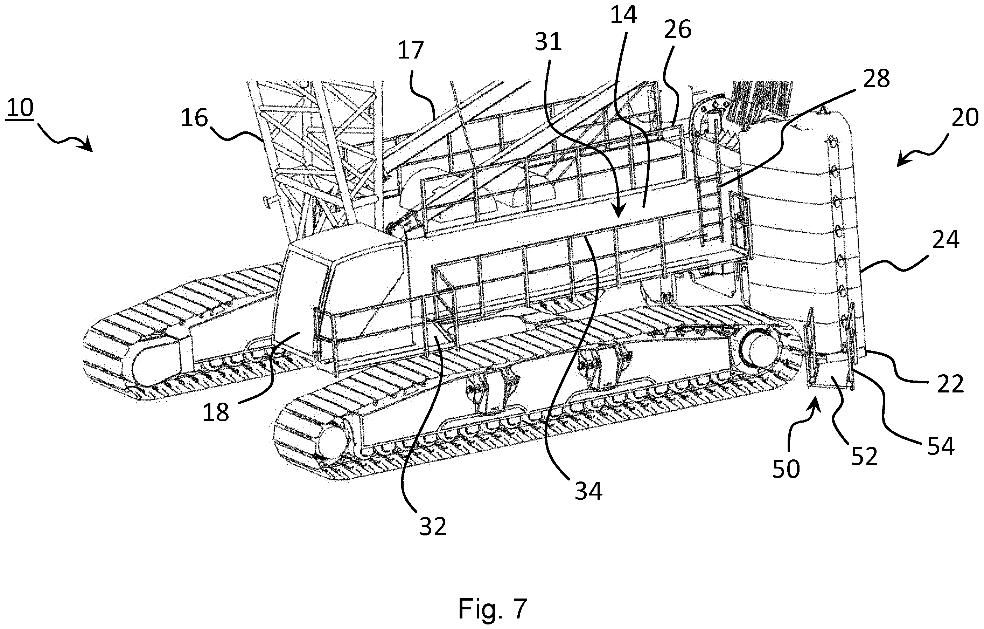

Die Figur 7 zeigt einen vergrößerten Ausschnitt des Oberwagens 14 des erfindungsgemäßen Mobilkrans 10. Der Oberwagenballast 20 kann mittels eines Hebemechanismus des Mobilkrans 10, welcher auch als Selbstverladesystem bezeichnet werden kann, vom Boden angehoben bzw. vom Oberwagen 14 aus am Boden abgesetzt werden. Dadurch kann die Ballastaufnahmeplatte 22 am Boden mit Ballastelementen 24 beladen und der fertig gerüstete bzw. gestapelte Oberwagenballast 20 anschließend mittels des Hebemechanismus an den Oberwagen 14 gehoben werden.

Der Hebemechanismus wird vorliegend auch zum Rüsten des Zugangs der Oberwagenbegehung 31 genutzt. Der Zugang erfolgt im Heckbereich über ein ebenfalls in Leichtbauweise gefertigtes Zugangselement 50 bzw. Zugangsmodul, welches einen Boden 52 (insbesondere Gitterboden) und beidseitig zwei Geländer 54 aufweist. Das Zugangselement 50 wird schwenkbar an der Ballastaufnahmeplatte 22 befestigt, insbesondere über eine Einhängeverbindung. Die Montage erfolgt bei abgesetztem Oberwagenballast 20, wie in der Figur 7 zu sehen.

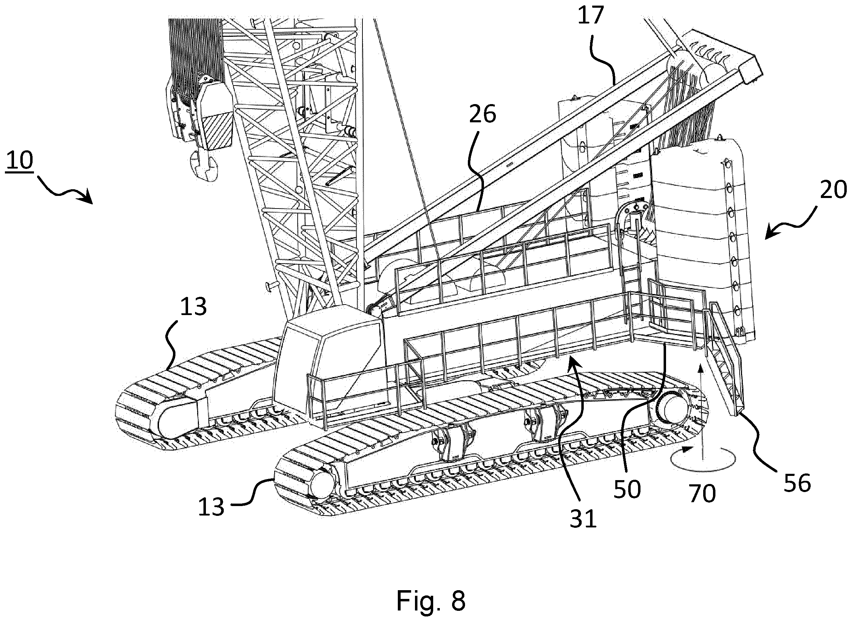

Durch Anheben des Oberwagenballasts 20 mittels des Hebemechanismus wird das Zugangsmodul 50 automatisch in der richtigen Höhe - nämlich auf Höhe der Oberwagenbegehung 31 - positioniert. Im Heckbereich weist die Oberwagenbegehung 31 eine Lücke im Geländer auf, an welche das Zugangselement 50 angebaut wird. Diese Lücke kann z.B. durch ein spezielles Podest 30 (beispielsweise lediglich ein klappbarer Boden) bereitgestellt werden oder durch eine fest mit dem Oberwagen 14 verbundene Plattform. Wie in der Figur 8 gezeigt ist, wird das Zugangselement 50 von einem Bediener vom Boden aus zur Oberwagenbegehung 31 rotiert (vgl. die Pfeile 70, welche die Hebe- und Rotationsrichtungen andeuten) und an die Oberwagenbegehung 31 angeschlossen. Hier kann eine Verriegelung vorgesehen sein.

Eine Zugangstreppe 56 kann nun an spezielle Befestigungselemente des Zugangselements 50 angebaut, insbesondere eingehängt, werden, damit die erhöhte Oberwagenbegehung 31 von einem Bediener bestiegen werden kann.

Im Bereich des (angebauten) Zugangselements 50 befindet sich eine insbesondere ausfahrbare Leiter 28 (vgl. Figur 7), über die die Oberseite des Oberwagens 14 bestiegen werden kann. Zur Sicherung sind an der Oberseite des Oberwagens 14 an den Rändern Oberwagengeländer 26 angebracht.

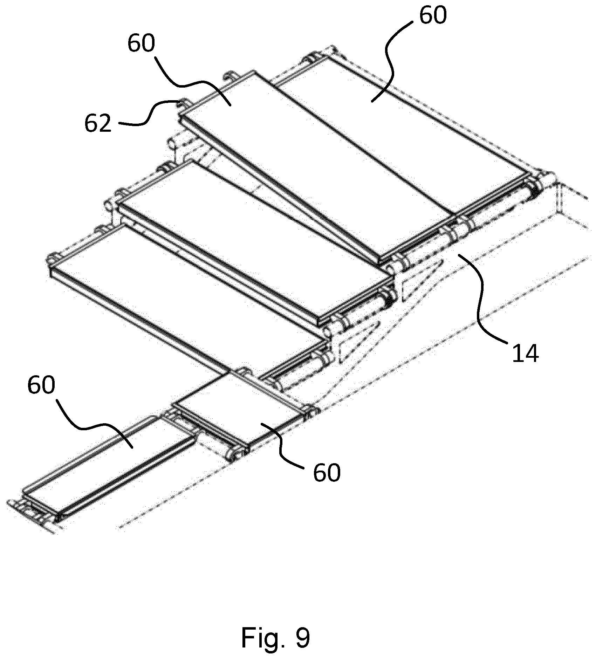

Die Begehung des Oberwagens 14 erfolgt über selbsttragende und in Leichtbauweise gefertigte Profilböden bzw. Bodenelemente 60. Ein Ausführungsbeispiel für einen durch derartige Bodenelemente 60 gebildeten begehbaren Bereich des Oberwagens 14 ist in der Figur 9 gezeigt. Die Bodenelemente 60 sind auf dem vorhandenen Grundrahmen des Oberwagens 14 sehr leicht verschiebbar und zudem klappbar ausgeführt. Hierzu weisen sie seitlich Hakenelemente 62 auf, über die sie auf entsprechenden Befestigungselementen am Grundrahmen aufliegen. Die Bodenelemente 60 sind unterschiedlich geformt, also unterschiedlich lang und breit, und daher flexibel an die Oberwagengeometrie und die an der Oberseite installierten Objekte bzw. Hindernisse anpassbar. Ein derartig begehbarer Bereich aus Profilböden bzw. Bodenelemente 60 ist nicht nur auf dem Oberwagen sondern auch in anderen Bereichen, beispielsweise anstelle der Gitterböden in den Klapppodesten einsetzbar.

Die erfindungsgemäßen Podeste 30 ermöglichen eine schnelle und einfache Installation der Oberwagenbegehung 31 ohne externe Hilfsmittel wie einen Hilfskran oder Handwerkzeuge vom Boden aus und durch nur einen einzigen Bediener. Obwohl sie insbesondere aus Metall bestehen, sind sie in einer Leichtbauweise gefertigt und dadurch einfach handhabbar.

### Bezugszeichenliste:

- 10: Mobilkran
- 12: Unterwagen
- 13: Raupenfahrwerk
- 14: Oberwagen
- 16: Hauptausleger
- 17: A-Bock
- 18: Fahrerkabine
- 20: Oberwagenballast
- 22: Ballastaufnahmeplatte
- 24: Ballastelement
- 26: Oberwagengeländer
- 28: Zugangsleiter
- 30: Podest
- 31: Oberwagenbegehung
- 32: Boden
- 34: Geländer
- 35: Klappteil
- 36: Hakenelement
- 37: Halterung
- 38: Bodenbefestigungselement (Schwenkkonsole)
- 40: Geländerbefestigungselement
- 42: Griff
- 50: Zugangselement
- 52: Boden
- 54: Geländer
- 56: Zugangstreppe
- 60: Bodenplatte
- 62: Hakenelement
- 70: Bewegungsrichtung
- A1: Erste Schwenkachse
- A2: Zweite Schwenkachse

## Patentansprüche

1. Mobilkran (10), insbesondere Raupenkran, umfassend einen Unterwagen (12) mit einem Fahrwerk (13) und einen drehbar auf dem Unterwagen (12) gelagerten Oberwagen (14) mit einem schwenkbaren Ausleger (16), wobei seitlich am Oberwagen (14) mindestens zwei Podeste (30) permanent angeordnet sind, über die der Oberwagen (14) begehbar ist,
wobei die Podeste (30) jeweils einen Boden (32) umfassen, welche von einer Trasportstellung, in der sie am Oberwagen (14) anliegen, in eine Arbeitsstellung, in der die Böden (32) begehbar, bewegbar sind und umgekehrt,
**dadurch gekennzeichnet,**
**dass** die Podeste jeweils auch ein Geländer (34) umfassen, in der die Böden (32) in einer Arbeitsstellung durch das Geländer (34) gesichert sind, sodass die Podeste (30) um mindestens zwei Schwenkachsen (A1, A2) in die Arbeitsstellung verschwenkbar sind, wobei vorzugsweise zwei der mindestens zwei Schwenkachsen (A1, A2) nicht parallel zueinander stehen und, dass die Böden (32) um zwei nicht-parallele, insbesondere um zwei senkrecht zueinander stehende, Schwenkachsen (A1, A2) in die Arbeitsstellung verschwenkbar und die Geländer (34) in die Arbeitsstellung schwenkbar, klappbar, verschiebbar und/oder teleskopierbar sind.

2. Mobilkran (10) nach einem der vorhergehenden Ansprüche, **dadurch gekennzeichnet, dass** die Böden (32) und die Geländer (34) der Podeste (30) unabhängig voneinander bewegbar und vorzugsweise unabhängig voneinander mit Böden (32) / Geländern (34) benachbarter Podeste (30) verbindbar sind.

3. Mobilkran (10) nach einem der vorhergehenden Ansprüche, **dadurch gekennzeichnet, dass** die Podeste (30) in ihren Arbeitsstellungen miteinander lösbar verbindbar, insbesondere ineinander einhängbar und/oder miteinander verbolzbar und/oder verschraubbar sind.

4. Mobilkran (10) nach einem der vorhergehenden Ansprüche, **dadurch gekennzeichnet, dass** die Böden (32) Hakenelemente (36) aufweisen, über die sie in der Arbeitsstellung an Bodenbefestigungselementen (38) benachbarter Podeste und/oder an Bodenbefestigungselementen am Oberwagen (14) einhängbar sind.

5. Mobilkran (10) nach einem der vorhergehenden Ansprüche, **dadurch gekennzeichnet, dass** die Geländer (34) schwenkbar, klappbar, verschiebbar und/oder teleskopierbar und über Geländerbefestigungselemente (40) mit benachbarten Geländern (34) und/oder mit dem Oberwagen (14) verbindbar sind.

6. Mobilkran (10) nach einem der vorhergehenden Ansprüche, **dadurch gekennzeichnet, dass** der Oberwagen (14) eine Fahrerkabine (18) umfasst, in deren Bereich mindestens ein weiteres Podest (30) angeordnet ist, wobei vorzugsweise die mindestens drei Podeste (30) in der Arbeitsstellung eine durchgängige Oberwagenbegehung (31) entlang einer Seite des Oberwagens (14) bilden.

7. Mobilkran (10) nach Anspruch 6, **dadurch gekennzeichnet, dass** der Zugang der Oberwagenbegehung (31) im Bereich des der Fahrerkabine (18) gegenüberliegenden Hecks des Oberwagens (14) erfolgt.

8. Mobilkran (10) nach einem der vorhergehenden Ansprüche, **dadurch gekennzeichnet, dass** ein Zugangselement (50) mit einem Boden (52) und einem Geländer (54) am Oberwagen (14) derart anbringbar ist, dass eine durch die in der Arbeitsstellung befindlichen Podeste (30) gebildete Oberwagenbegehung (31) über das Zugangselement (50) zugänglich ist.

9. Mobilkran (10) nach Anspruch 8, **dadurch gekennzeichnet, dass** das Zugangselement (50) eine insbesondere schwenkbare Zugangstreppe (56) oder Befestigungselemente zur Befestigung einer Zugangstreppe (56) umfasst.

10. Mobilkran (10) nach Anspruch 8 oder 9, **dadurch gekennzeichnet, dass** der Oberwagen (14) einen Oberwagenballast (20) aufweist, welcher über einen Hebemechanismus des Mobilkrans (10) vom Boden anhebbar und auf dem Boden abstellbar ist, wobei das Zugangselement (50) am Oberwagenballast (20), insbesondere an einer Ballastaufnahmeplatte (22) des Oberwagenballasts (20), befestigt oder befestigbar und durch Anheben des Oberwagenballasts (20) auf Höhe der Oberwagenbegehung (31) bringbar ist.

11. Mobilkran (10) nach Anspruch 10, **dadurch gekennzeichnet, dass** das Zugangselement (50) schwenkbar am Oberwagenballast (20) gelagert oder lagerbar ist, wobei das über den Oberwagenballast (20) angehobene Zugangselement (50) durch Verschwenken mit der Oberwagenbegehung (31), insbesondere mit einem Podest (30), verbindbar ist.

12. Mobilkran (10) nach einem der vorhergehenden Ansprüche, **dadurch gekennzeichnet, dass** die Oberseite des Oberwagens (14) begehbar und an der Oberseite des Oberwagens (14) ein Oberwagengeländer (26) vorgesehen ist, wobei der Zugang der Oberseite des Oberwagens (14) vorzugsweise ausgehend von einer durch die in der Arbeitsstellung befindlichen Podeste (30) gebildeten Oberwagenbegehung (31) über eine Zugangsleiter (28) oder Zugangstreppe erfolgt.

13. Mobilkran (10) nach Anspruch 12, **dadurch gekennzeichnet, dass** an der Oberseite des Oberwagens (14) mindestens ein Bodenelement (60) verschiebbar und/oder klappbar gelagert ist, wobei vorzugsweise ein begehbarer Bereich an der Oberseite des Oberwagens (14) durch eine Mehrzahl von derartigen Bodenelementen (60) gebildet ist.

## Claims

1. A mobile crane (10), in particular a crawler crane, comprising an undercarriage (12) having a chassis (13) and a superstructure (14) rotatably supported on the undercarriage (12) and having a pivotable boom (16), wherein at least two platforms (30) are permanently arranged laterally at the superstructure (14) via which the superstructure (14) is walkable,
wherein the platforms (30) each comprise a base (32) movable from a transport position in which they contact the superstructure (14) into a work position in which the bases (32) are walkable, movable, and vice versa,
**characterized in that**
the platforms each also comprise a railing (34) in which the bases (32) are secured in a working position by the railings (34) so that the
platforms (30) are pivotable about at least two pivot axes (A1, A2) into the work position, with two of the at least two pivot axes (A1, A2) preferably not being in parallel with one another and so that the bases (32) are pivotable into the work position about two non-parallel pivot axes (A1, A2), in a particular two pivot axes (A1, A2) perpendicular to one another and the railings (34) are pivotable, foldable, displaceable, and/or telescopable into the work position.

2. A mobile crane (10) in accordance with one of the preceding claims, **characterized in that** the bases (32) and the railings (34) of the platforms (30) are movable independently of one another and are preferably connectable independently of one another to bases (32)/railings (34) of adjacent platforms (30).

3. A mobile crane (10) in accordance with one of the preceding claims, **characterized in that** the platforms (30) are releasably connectable to one another in their work positions, in particular hookable into one another and/or pinnable and/or screwable to one another

4. A mobile crane (10) in accordance with one of the preceding claims, **characterized in that** the bases (32) have hook elements (36) via which they can be hooked to base fastening elements (38) of adjacent platforms and/or to base fastening elements at the superstructure (14) in the work position.

5. A mobile crane (10) in accordance with one of the preceding claims, **characterized in that** the railings (34) are pivotable, foldable, displaceable, and/or telescopable and are connectable to adjacent railings (34) and/or to the superstructure (14) via railing fastening elements (40).

6. A mobile crane (10) in accordance with one of the preceding claims, **characterized in that** the superstructure (14) comprises an operator's cabin (18) in whose area at least one further platform (30) is arranged, with the at least three platforms (30) preferably forming a continuous superstructure walking platform (31) along one side of the superstructure (14) in the work position.

7. A mobile crane (10) in accordance with claim 6, **characterized in that** access to the superstructure walking platform (31) takes place in the region of the rear of the superstructure (14) disposed opposite the operator's cabin (18).

8. A mobile crane (10) in accordance with one of the preceding claims, **characterized in that** an access element (50) having a base (52) and a railing (54) is attachable to the superstructure (14) such that a superstructure walking platform (31) formed by the platforms (30) located in the work position is accessible via the access element (50).

9. A mobile crane (10) in accordance with claim 8, **characterized in that** the access element (50) comprises access steps (56) that are in particular pivotable or fastening elements for fastening access steps (56).

10. A mobile crane (10) in accordance with claim 8 or claim 9, **characterized in that** the superstructure (14) has superstructure ballast (20) that can be raised from the ground and placed on the ground via a lifting mechanism of the mobile crane (10), with the access element (50) being fastened or fastenable to the superstructure ballast (20), in particular to a ballast receiving plate (22) of the superstructure ballast (20) and can be moved to the height of the superstructure walking platform (31) by raising the superstructure ballast (20).

11. A mobile crane (10) in accordance with claim 10, **characterized in that** the access element (50) is pivotably supported or supportable at the superstructure ballast (20), with the access element (50) raised via the superstructure ballast (20) being connectable to the superstructure walking platform (31), in particular to a platform (30), by pivoting.

12. A mobile crane (10) in accordance with one of the preceding claims, **characterized in that** the upper side of the superstructure (14) is walkable; and **in that** a superstructure railing (26) is provided at the upper side of the superstructure (14), with access to the upper side of the superstructure (14) preferably taking place starting from a superstructure walking platform (31) formed by the platforms (30) located in the work position via an access ladder (28) or access steps.

13. A mobile crane (10) in accordance with claim 12, **characterized in that** at least one base element (60) is displaceably and/or foldably supported at the upper side of the superstructure (14), with a walkable region preferably being formed by a plurality of such base elements (60) at the upper side of the superstructure (14).

## Revendications

1. Grue mobile (10), en particulier grue à chenilles, comprenant un châssis inférieur (12) pourvu d'un mécanisme de roulement (13) et une tourelle (14) montée rotative sur le châssis inférieur (12) et pourvue d'une flèche (16) pivotante, au moins deux plateformes (30) étant agencées latéralement sur la tourelle (14) de manière permanente, par le biais desquelles il est possible de marcher sur la tourelle (14),
les plateformes (30) comprenant chacune un plancher (32), lesquels peuvent être déplacés d'une position de transport, dans laquelle ils sont plaqués contre la tourelle (14), à une position de travail, dans laquelle il est possible de marcher sur les planchers (32), et inversement,
**caractérisée en ce que**
les plateformes comprennent chacune également un garde-corps (34), les planchers (32) étant fixés par le garde-corps (34) dans une position de travail, de telle sorte que les plateformes (30) peuvent être pivotées autour d'au moins deux axes de pivotement (A1, A2) dans la position de travail, deux des au moins deux axes de pivotement (A1, A2) n'étant de préférence pas parallèles entre eux et **en ce que** les planchers (32) peuvent être pivotés autour de deux axes de pivotement (A1, A2) non parallèles, en particulier perpendiculaires l'un à l'autre dans la position de travail et les garde-corps (34) peuvent être pivotés, rabattus, déplacés et/ou déployés dans la position de travail.

2. Grue mobile (10) selon l'une des revendications précédentes, **caractérisée en ce que** les planchers (32) et les garde-corps (34) des plateformes (30) peuvent être déplacés indépendamment les uns des autres et de préférence reliés indépendamment les uns des autres à des planchers (32) / garde-corps (34) de plateformes (30) voisines.

3. Grue mobile (10) selon l'une des revendications précédentes, **caractérisée en ce que**, dans leur position de travail, les plateformes (30) peuvent être reliées les unes aux autres de manière libérable, en particulier accrochées les unes dans les autres et/ou boulonnées et/ou vissées les unes aux autres.

4. Grue mobile (10) selon l'une des revendications précédentes, **caractérisée en ce que** les planchers (32) présentent des éléments formant crochet (36), par le biais desquels ils peuvent, dans la position de travail, être accrochés à des éléments de fixation de plancher (38) de plateformes voisines et/ou à des éléments de fixation de plancher sur la tourelle (14).

5. Grue mobile (10) selon l'une des revendications précédentes, **caractérisée en ce que** les garde-corps (34) peuvent être pivotés, rabattus, déplacés et/ou déployés, et reliés par le biais d'éléments de fixation de garde-corps (40) à des garde-corps (34) voisins et/ou à la tourelle (14).

6. Grue mobile (10) selon l'une des revendications précédentes, **caractérisée en ce que** la tourelle (14) comprend une cabine de conducteur (18), dans la zone de laquelle au moins une autre plateforme (30) est agencée, les au moins trois plateformes (30) formant de préférence, dans la position de travail, une passerelle de tourelle (31) continue le long d'un côté de la tourelle (14).

7. Grue mobile (10) selon la revendication 6, **caractérisée en ce que** l'accès de la passerelle de tourelle (31) s'effectue dans la zone de l'arrière de la tourelle (14) opposé à la cabine de conducteur (18).

8. Grue mobile (10) selon l'une des revendications précédentes, **caractérisée en ce qu'**un élément d'accès (50) pourvu d'un plancher (52) et d'un garde-corps (54) peut être monté sur la tourelle (14) de telle manière qu'une passerelle de tourelle (31), formée par les plateformes (30) se trouvant en position de travail, est accessible par le biais de l'élément d'accès (50).

9. Grue mobile (10) selon la revendication 8, **caractérisée en ce que** l'élément d'accès (50) comprend un escalier d'accès (56) en particulier pivotant ou des éléments de fixation pour la fixation d'un escalier d'accès (56).

10. Grue mobile (10) selon la revendication 8 ou 9, **caractérisée en ce que** la tourelle (14) présente un lest de tourelle (20), qui peut être levé du sol et posé au sol par le biais d'un mécanisme de levage de la grue mobile (10), l'élément d'accès (50) étant ou pouvant être fixé sur le lest de tourelle (20), en particulier sur une plaque de réception de lest (22) du lest de tourelle (20), et pouvant être amené à la hauteur de la passerelle de tourelle (31) en levant le lest de tourelle (20).

11. Grue mobile (10) selon la revendication 10, **caractérisée en ce que** l'élément d'accès (50) est ou peut être monté pivotant sur le lest de tourelle (20), l'élément d'accès (50) levé par le biais du lest de tourelle (20) pouvant être relié à la passerelle de tourelle (31), en particulier à une plateforme (30), par pivotement.

12. Grue mobile (10) selon l'une des revendications précédentes, **caractérisée en ce qu'**il est possible de marcher sur le côté supérieur de la tourelle (14) et un garde-corps de tourelle (26) est prévu sur le côté supérieur de la tourelle (14), l'accès du côté supérieur de la tourelle (14) s'effectuant de préférence à partir d'une passerelle de tourelle (31) formée par les plateformes (30) se trouvant en position de travail, par le biais d'une échelle d'accès (28) ou d'un escalier d'accès.

13. Grue mobile (10) selon la revendication 12, **caractérisée en ce qu'**au moins un élément de plancher (60) est monté mobile et/ou rabattable sur le côté supérieur de la tourelle (14), une zone sur laquelle il est possible de marcher étant de préférence formée sur le côté supérieur de la tourelle (14) par une pluralité d'éléments de plancher (60) de ce type.
